# EUROPÄISCHE PATENTSCHRIFT

(11) **EP 3 416 832 B1**
(45) Veröffentlichungstag und Bekanntmachung des Hinweises auf die Patenterteilung: **01.06.2022**
(21) Anmeldenummer: 17704268.6
(22) Anmeldetag: 10.02.2017
(51) Int. Cl.: B60B 3/04, B60B 3/12, B21D 53/26, B21H 1/02

(54) **FAHRZEUGRAD UND VERWENDUNG**
VEHICLE WHEEL AND USE
ROUE DE VÉHICULE ET UTILISATION

(30) Priorität: 17.02.2016 DE 102016202381
(43) Veröffentlichungstag der Anmeldung: 26.12.2018
(73) Patentinhaber: ThyssenKrupp Steel Europe AG, 47166 Duisburg (DE); thyssenkrupp AG, 45143 Essen (DE)
(72) Erfinder: PIERONEK, David, 44329 Dortmund (DE)
(74) Vertreter: ThyssenKrupp Steel Europe AG
(86) Internationale Anmeldenummer: PCT/EP2017/053035
(87) Internationale Veröffentlichungsnummer: WO 2017/140594

(56) Entgegenhaltungen:
- EP-A1- 2 326 517
- EP-B1- 2 326 517
- WO-A1-2012/084177
- DE-B3-102013 114 245
- US-A1- 2010 314 932

## Beschreibung

Die Erfindung betrifft ein Fahrzeugrad umfassend eine Felge zur Aufnahme eines Reifens und eine an die Felge stoff-, kraft- und/oder formschlüssig angebundene Radschüssel mit einem Anbindungsbereich zur lösbaren Anbindung an einen Radträger, wobei die Radschüssel aus einem zumindest bereichsweise wärmebehandelten Stahlwerkstück gebildet ist, wobei die Radschüssel mittels Warmumformung mit optional zumindest teilweiser (Press-) Härtung geformt ist. Ferner betrifft die Erfindung eine Verwendung des Fahrzeugrades.

Konventionell hergestellte Fahrzeugräder, beispielsweise Kraftfahrzeugräder, insbesondere in Stahlbauweise bestehen aus einer Felge zur Aufnahme eines Reifens und einer an die Felge stoff-, kraft- und/oder formschlüssig angebundene Radschüssel mit einem Anbindungsbereich zur lösbaren Anbindung an einen Radträger. Sowohl die Radschüssel als auch die Felge können mittels Drückwalzen bzw. Fließdrücken hergestellt sein. Das Drückwalzen hat den Vorteil, dass das Material während der Formgebung von einer konstanten Ausgangsmaterialdicke insbesondere belastungs- und/oder gewichtsoptimiert gedrückt werden kann, so dass unterschiedliche Materialdicken entlang des Querschnitts bei der Radschüssel (insbesondere bei Nutzfahrzeug-Radschüsseln) als auch bei der Felge (insbesondere bei Personenkraftfahrzeug-Felgen) erstellt werden können, welche zur Gewichtsreduzierung im Vergleich zu Radschüsseln und/oder Felgen mit einer konstanten Materialdicke beitragen können. Zusätzlich wird im Material durch die Kaltverfestigung die Werkstofffestigkeit erhöht. Beispielsweise kann an belastungskritische oder steifigkeitsrelevanten Stellen Material gedrückt werden, also eine lokale Erhöhung der Materialdicke gegenüber der Ausgangsmaterialdicke erzeugt werden, und an unkritischen Stellen die Materialdicke reduziert werden.

Um eine weitere Gewichtsreduzierung erreichen zu können, sind zum einen Material mit höherer Festigkeit bzw. Schwingfestigkeit zur sicheren Aufnahme der Betriebsbelastungen, und zum anderen Geometrieanpassungen zur Kompensierung der Steifigkeitsverluste aufgrund geringeren Werkstückdicken erforderlich. Mit ansteigender Festigkeit der Materialien nimmt aber in der Regel auch die Umformbarkeit des Materials ab. Somit stößt der Leichtbau mit kaltumformbaren Stählen an technische Grenzen. Abhilfe kann in diesen Fällen die sogenannte "Warmumformung" schaffen, in den Fachkreisen auch unter der indirekten oder direkten Warmumformung bekannt, wodurch die Anforderung nach hohen Umformgraden bei gleichzeitig hohen Festigkeiten der endgeformten Bauteile erfüllt werden kann.

Aus der EP 2 326 517 A1 ist beispielsweise ein Material für die Herstellung von Fahrzeugrädern angegeben, welches aus einem dreilagigen Werkstoffverbund mit einer Kernlage und zwei stoffschlüssig mittels Walzplattieren mit der Kernlage verbundene Außenlagen besteht, wobei die Kernlage eine geringere Festigkeit als die Außenlagen aufweist. Durch die geschickte Wahl der Werkstoffe für den Einsatz im Werkstoffverbund kann eine Gewichtsreduzierung im Vergleich zu monolithischen Materialien bewirkt werden. In der US 2010/0314932 A1 ist offenbart, wie eine Festigkeitssteigerung durch Einbringen von Druckeigenspannungen in einer Radschüssel eines zweiteiligen Fahrzeugrades eingestellt werden kann.

Leichtbaupotential bieten heutzutage Vergütungsstähle, insbesondere Warmumformstähle wie beispielsweise Mangan-Bor-Stähle, welche mechanische Lasten wie dynamische Wechselbeanspruchung aufnehmen können. Als Stand der Technik insbesondere zur Herstellung von Radschüsseln aus einem Warmumformstahl, welche zumindest bereichsweise pressgehärtet sein können, wird auf die Druckschriften DE 10 2007 019 485 A1, DE 10 2013 114 245 B3 und DE 10 2014 108 901 B3 verwiesen. In der Druckschrift DE 10 2007 019 485 A1 wird die Anbindung der gehärteten Einzelkomponenten (Felge/Radschüssel) unter anderem durch ein Verschweißen oder Löten vorgeschlagen. Das im Fahrzeugradbau etablierte MAG-Schweißen resultiert in einem Aufschmelzen des Grundwerkstoffs und bewirkt bei Warmumformstählen zusätzliche Anlasseffekte in der Wärmeeinflusszone unter Ausbildung einer Erweichungszone ("Härtesack"). Diese Erweichungszone im Umgebungsbereich der Schweißzone zeichnet sich durch eine geringe Festigkeit und Duktilität aus und bilden eine "metallurgische Kerbe", welche sich nachteilig auf die Betriebsfestigkeit der Verbindung respektive des gesamten Bauteils auswirkt und zu einem vorzeitigen Versagen führen kann, so dass die Werkstofffestigkeit nicht global auf das gesamte Fahrzeugrad übertragen werden kann. In Bezug auf den Stand der Technik besteht weiteres Verbesserungspotential insbesondere hinsichtlich einer hohen Betriebsfestigkeit und Sicherheit bei Fahrzeugrädern.

Der Erfindung lag die Aufgabe zugrunde, ein Fahrzeugrad bereitzustellen, welches eine im Vergleich zum bekannten Stand der Technik hohe Betriebsfestigkeit und Sicherheit aufweist, sowie eine entsprechende Verwendung anzugeben.

Gemäß einem ersten Aspekt der Erfindung wird die Aufgabe gemäß des erfindungsgemäßen Fahrzeugrades dahingehend gelöst, dass die Radschüssel zumindest im Übergangsbereich zur Anbindung an die Felge eine wärmebehandelte Gefügestruktur mit einer Zugfestigkeit zwischen 500 und 1300 MPa und/oder einer Härte zwischen 150 und 400 HV 0,1 aufweist.

Der Erfinder hat festgestellt, dass durch eine wärmebehandelte Gefügestruktur der Radschüssel zumindest im Übergangsbereich zur Anbindung an die Felge mit einer Zugfestigkeit zwischen 500 und 1300 MPa und/oder einer Härte zwischen 150 und 400 HV 0,1 (Vickers) positiv Einfluss auf die Betriebsfestigkeit und Sicherheit des ganzen Fahrzeugrades genommen werden kann und eine ausreichende Festigkeit und Duktilität bereitgestellt werden kann. Eine Zugfestigkeit unterhalb von 500 MPa bzw. eine Härte unter 150 HV 0,1 ist nicht ausreichend für die erforderliche Festigkeit und Schwingfestigkeit des Fahrzeugrades und eine Zugfestigkeit oberhalb von 1300 MPa bzw. eine Härte über 400 HV 0,1 gehen zu Lasten der Duktilität und Belastbarkeit der Verbindung zwischen der Radschüssel und der Felge.

Insbesondere weist die wärmebehandelte Gefügestruktur eine Zugfestigkeit zwischen 800 und 1200 MPa und/oder eine Härte zwischen 250 und 375 HV 0,1, vorzugsweise zwischen 850 und 1100 MPa und/oder eine Härte zwischen 265 und 340 HV 0,1, besonders bevorzugt zwischen 900 und 1050 MPa und/oder eine Härte zwischen 280 und 325 HV 0,1 auf, wodurch eine optimale Betriebsfestigkeit und Sicherheit des gesamten Fahrzeugrades gewährleistet werden kann.

Die Radschüssel ist stoff-, kraft- und/oder formschlüssig an die Felge angebunden. Vorzugsweise wird die Radschüssel zumindest teilweise, insbesondere vollständig umlaufend an ihrer Kante über eine Fügenaht, beispielsweise eine Kehlnaht, welche als MIG-, MAG-, Laser-, Schweiß- oder Lötnaht ausgeführt sein kann, an die Felge angebunden. Alternativ kann die Radschüssel auch mittels Kleben und/oder Widerstandsschweißen an die Felge in ihrem Überlappungs-/Übergangsbereich angebunden sein. Alternativ oder kumulativ ist auch eine kraftschlüssige Anbindung durch einen (zusätzlichen) Presssitz zwischen Radschüssel und Felge im Überlappungs-/Übergangsbereich denkbar, insbesondere zur Entlastung zusätzlicher Verbindungsmittel. In Abhängigkeit von der eingestellten Festigkeit/Härte im Übergangsbereich ist auch der Einsatz von formschlüssigen, mechanischen Fügeverfahren, wie zum Beispiel Clinchen, Nieten oder mit Funktionselementen möglich. Die Anbindung zwischen Radschüssel und Felge muss nicht zwangsläufig im sogenannten "Tiefbett" erfolgen. Radkonstruktionen, wie zum Beispiel sogenannte Semi- oder Full-Face-Scheibenräder oder mit mehrteiliger Ausführung sind denkbar.

Gemäß einer weiteren Ausführung des erfindungsgemäßen Fahrzeugrades ist die Radschüssel aus einem Vergütungsstahl, insbesondere aus einem Warmumformstahl oder lufthärtenden Stahl gebildet. Die genannten Stahllegierungen haben den Vorteil, dass sie härtbar sind und in dem entsprechenden Bauteil eine hohe Härte respektive hohe Zugfestigkeit eingestellt werden kann. Mit zunehmender Festigkeit kann bei im Wesentlichen gleichen Bedingungen die jeweilige Materialdicke weiter reduziert werden und dadurch das Gewicht weiter herabgesetzt werden. Zudem weisen sie eine höhere zyklische Biegewechselfestigkeit auf, welche insbesondere einer höheren Lebensdauer der entsprechenden Bauteile zugutekommt und dadurch insbesondere ein frühzeitiges Materialversagen durch Rissbildung im Wesentlichen verhindert werden kann. Auch die Verwendung eines Werkstoffverbundes mit beispielsweise drei Stahllagen, von denen mindestens eine Lage vergütbar, insbesondere härtbar ist, ist denkbar. Anzumerken ist, dass die Zugfestigkeit respektive Härte über die Materialdicke gemittelt wird, insbesondere auch wenn ein monolithischer Werkstoff randschichtgehärtet ist.

Gemäß einer weiteren Ausführung des erfindungsgemäßen Fahrzeugrades erstreckt sich die wärmebehandelte Gefügestruktur mit einer Zugfestigkeit zwischen 500 und 1300 MPa und/oder einer Härte zwischen 150 und 400 HV aus dem Übergangsbereich zumindest bereichsweise in einen ersten Bereich, in welchem optional Öffnungen vorgesehen sein können. Die Ausdehnung der wärmebehandelten Gefügestruktur in einen weiteren Bereich kann sich positiv auf die Übertragung von Kräften mit häufigen Lastwechseln von dem auf der Felge montierten Reifen in den Radträger auswirken, insbesondere aufgrund der (hohen) Kerbwirkung der eingebrachten Belüftungslöcher. Ferner kann, wenn die wärmebehandelte Gefügestruktur vollständig den ersten Bereich ausfüllt und Öffnungen im ersten Bereich vorgesehen sind, ein nachträgliches Stanzen der Öffnungen nach der Fertigstellung der Endgeometrie der Radschüssel bei beispielsweise mechanisch geringem Werkzeugverschleiß erleichtert werden. Die Öffnungen fungieren beispielsweise als Belüftungslöcher und/oder reduzieren durch gezieltes Ausstanzen bzw. Weglassen von Material das Gesamtgewicht des Fahrzeugrades.

Gemäß einer weiteren Ausführung des erfindungsgemäßen Fahrzeugrades ist die wärmebehandelte Gefügestruktur mit einer Zugfestigkeit zwischen 500 und 1300 MPa und/oder einer Härte zwischen 150 und 400 HV 0,1 zumindest bereichsweise in einem zweiten Bereich vorgesehen. Der zweite Bereich kann beispielsweise den Anbindungsbereich zur lösbaren Anbindung an einen Radträger umfassen, in welchem Öffnungen zur Aufnahme von Verbindungsmitteln (Bolzen/Schrauben) vorgesehen sind. Dies hat beispielsweise den Vorteil, dass im Bereich der Anbindungsfläche für die Verbindungsmittel lokale Spannungsspitzen vergleichmäßigt bzw. großflächig in umliegende Bereiche verteilt werden können und damit die Kerbempfindlichkeit reduziert werden kann, wodurch bei schwingbelasteten Bauteilen die Lebensdauer des Gesamtsystems gesteigert werden kann.

Gemäß einer weiteren Ausführung des erfindungsgemäßen Fahrzeugrades umfasst die Radschüssel mindestens einen dritten Bereich, welcher eine Gefügestruktur mit einer Zugfestigkeit größer als 1300 MPa und/oder einer Härte größer als 400 HV 0,1, insbesondere eine (press-) gehärtete Gefügestruktur aufweist. Der dritte Bereich kann beispielsweise zwischen dem Anbindungsbereich zur lösbaren Anbindung an einen Radträger (zweiter Bereich) und dem ersten Bereich, welcher an dem Übergangsbereich zur Anbindung an die Felge angrenzt, vorgesehen sein und der lokalen/globalen Versteifung der Radschüssel dient.

Gemäß einer weiteren Ausführung des erfindungsgemäßen Fahrzeugrades weist die komplette Radschüssel eine wärmebehandelte Gefügestruktur mit einer Zugfestigkeit zwischen 500 und 1300 MPa und/oder einer Härte zwischen 150 und 400 HV 0,1 auf, wodurch eine homogene Festigkeit/Härte in der schwingbelasteten Radschüssel bereitgestellt wird und damit metallurgische Kerben im Wesentlichen verhindert werden können.

Gemäß einer weiteren Ausführung des erfindungsgemäßen Fahrzeugrades ist die Felge aus einem Vergütungsstahl, insbesondere aus einem Warmumformstahl oder einem lufthärtenden Stahl gebildet und weist zumindest bereichsweise eine wärmebehandelte Gefügestruktur mit einer Zugfestigkeit zwischen 500 und 1300 MPa und/oder einer Härte zwischen 150 und 400 HV 0,1 auf, beispielsweise in einem Bereich, in welchem die Radschüssel mit ihrem Übergangsbereich anliegt und/oder eingepresst ist und angebunden ist. Auch die Verwendung eines Werkstoffverbundes mit beispielsweise drei Stahllagen, von denen mindestens eine Lage vergütbar, insbesondere härtbar ist, ist denkbar. Die Betriebsfestigkeit und Sicherheit des Fahrzeugrades kann bei der Verwendung der vorgenannten Stähle als Material für die Felge erhöht werden. Auch weitere Bereiche können individuell und je nach Ausführung der Felge eine wärmebehandelte Gefügestruktur aufweisen. Beispielsweise weist der das sogenannte Felgenhorn bildende Bereich eine wärmebehandelte Gefügestruktur auf, welcher mindestens auf der dem Radträger abgewandten Seite im montierten Zustand des Fahrzeugrades vorgesehen ist, um im Falle eines Bordsteinkontaktes eine vollständige Beschädigung zu vermeiden. Alternativ kann die komplette Felge eine wärmebehandelte Gefügestruktur mit einer Zugfestigkeit zwischen 500 und 1300 MPa und/oder einer Härte zwischen 150 und 400 HV 0,1 aufweisen.

Erfindungsgemäß ist die Radschüssel mittels Warmumformung mit optional zumindest teilweiser (Press-) Härtung geformt, wobei sich die wärmebehandelte Gefügestruktur zumindest im Übergangsbereich der Radschüssel zur Anbindung an eine Felge vor, während und/oder nach einem Formen durch eine zumindest bereichsweise Wärmebehandlung einstellt.

Gemäß einer weiteren Ausführung des erfindungsgemäßen Fahrzeugrades ist die Felge mittels Druckumformen, Zugumformen, Zugdruckumformen, Biegeumformen, Schubumformen, Drückwalzen oder Tiefziehen, insbesondere mittels Warmumformung mit optional zumindest teilweiser (Press-) Härtung, oder mittels einer Kombination der genannten Herstellungsverfahren geformt, wobei sich die wärmebehandelte Gefügestruktur zumindest in einem Bereich in der Felge vor, während und/oder nach einem Formen durch eine zumindest bereichsweise Wärmebehandlung einstellt.

Durch die Auswahl geeigneter Stahlwerkstoffe, vorzugsweise eine der vorgenannten Stähle, auch mehrlagig als Werkstoffverbund denkbar, können in Kombination mit einer zumindest bereichsweisen und maßgeschneiderten Wärmebehandlung gezielt wärmebehandelte Gefügestrukturen mit einer Zugfestigkeit zwischen 500 und 1300 MPa und/oder einer Härte zwischen 150 und 400 HV 0,1 eingestellt werden. Die zumindest bereichsweise wärmebehandelte Gefügestruktur kann beispielsweise bei der indirekten und auch direkten Warmumformung eingestellt werden, beispielsweise durch Vermeidung einer Erwärmung des betroffenen Bereichs oberhalb der A_{c3}-Temperatur des Werkstoffs, so dass sich beim anschließenden (Press-) Härten in einem vollständig gekühlten Werkzeug oder über andere geeignete Mittel zum Abschrecken, kein vollständig gehärtetes Gefüge ausbildet. Beispielsweise kann der betroffene Bereich teilaustenitisiert, d. h. in einem Temperaturfenster zwischen A_{c1} und A_{c3} erwärmt werden. Alternativ oder kumulativ kann im betroffenen Bereich über geeignete Mittel ein schroffes Abkühlen verhindert werden, beispielsweise durch temperierte Abschnitte in einem Werkzeug zum Warmumformen und/oder (Press-) Härten. Die wärmebehandelte Gefügestruktur besteht beispielsweise aus mindestens zwei der Phasen Ferrit, Perlit, Bainit, Austenit oder Martensit, insbesondere überwiegend aus Ferrit mit mindestens einer der Phasen Perlit, Bainit, Austenit oder Martensit.

Beispielsweise kann der Werkstoff oder Werkstoffverbund, insbesondere oberhalb der A_{c1}-Temperatur, vorzugsweise oberhalb der A_{c3}-Temperatur erwärmt, warmumgeformt und zumindest bereichsweise pressgehärtet werden (direkte Warmumformung) oder beispielsweise kaltumgeformt, wobei die Form, welche im Wesentlichen der Endgeometrie des entsprechenden Bauteils entspricht, oberhalb der A_{c1}-Temperatur, vorzugsweise oberhalb der A_{c3}-Temperatur erwärmt und anschließend zumindest bereichsweise gehärtet werden (indirekte Warmumformung). Die zumindest bereichsweise wärmebehandelte Gefügestruktur kann nachträglich durch eine Wärmebehandlung der betroffenen Bereiche, welche beispielsweise im Gefüge überwiegend Martensit aufweisen, insbesondere durch Anlassen bzw. Erwärmen mittels geeigneten Mitteln, beispielsweise mittels Induktoren, Öfen, Laser, Kontakterwärmung oder Brennern eingestellt werden. Die wärmebehandelte Gefügestruktur kann sich bereichsweise oder auch vollständig im gefertigten Bauteil nach einer Warmumformung oder kalten Umformung mit anschließender Erwärmung auf beispielsweise eine Teilaustenitisierungstemperatur und ohne aktive Kühlung bzw. schroffes Abkühlen sondern lediglich durch Abkühlung an Luft (Lufthärtung) einstellen. Auch weitere, hier nicht erwähnte Wärmebehandlungsverfahren sind denkbar, welche zur Einstellung einer wärmebehandelten Gefügestruktur mit den vorgenannten Eigenschaften geeignet sind.

Der zweite Aspekt der Erfindung betrifft eine Verwendung des Fahrzeugrades in Personenkraftwagen, Nutzfahrzeugen, Lastkraftwagen, Sonderfahrzeugen, Bussen, Omnibussen, ob mit Verbrennungsmotor und/oder elektrischem Antrieb, Anhänger oder Trailer. Je nach Fahrzeugtyp ist das Fahrzeugrad mit seiner Radschüssel und Felge mit entsprechenden Materialdicken, welche entlang des jeweiligen Querschnitts auch variieren können, belastungs- und/oder gewichtsoptimiert ausgelegt.

Im Folgenden wird die Erfindung anhand einer Ausführungsbeispiele darstellenden Zeichnung näher erläutert. Gleiche Teile sind mit gleichen Bezugszeichen versehen. Es zeigt
- Figur 1): ein erfindungsgemäßes Fahrzeugrad in perspektivischer Darstellung und
- Figur 2): einen Teilquerschnitt durch das Fahrzeugrad in Fig. 1).

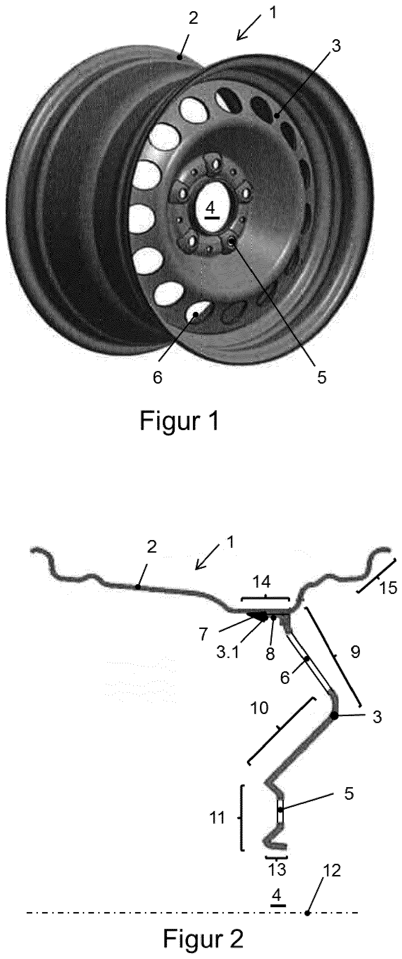

In Figur 1) ist in perspektivischer Darstellung ein Ausführungsbeispiel eines erfindungsgemäßen Fahrzeugrades (1) gezeigt, beispielsweise für einen Personenkraftwagen. In Figur 2) ist ein Teilquerschnitt durch das Fahrzeugrad 1) dargestellt, wobei aufgrund der rotationssymmetrischen Ausführung nur der obere Bereich des Fahrzeugrades (1) oberhalb der Symmetrieachse (12) im Schnitt abgebildet ist. Das Fahrzeugrad (1) umfasst eine insbesondere profilierte Felge (2) zur Aufnahme eines nicht dargestellten Reifens und eine an die Felge (2) stoff-, form- und/oder kraftschlüssig angebundene Radschüssel (3). Wie in Figur 2) im Detail zu erkennen ist, ist vorzugsweise die Radschüssel (3) zumindest teilweise an ihrer Kante (3.1) über eine Fügenaht (7), beispielsweise eine Kehlnaht, welche als MIG-, MAG-, Laser-, Schweiß- oder Lötnaht ausgeführt sein kann, an die Felge (2) angebunden. Alternativ kann die Radschüssel auch mittels Kleben und/oder Widerstandsschweißen und/oder mittels mechanischer Verbindung an die Felge in ihrem Überlappungs-/Übergangsbereich angebunden sein. Zusätzlich ist auch eine kraftschlüssige Anbindung im Überlappungs-/Übergangsbereich durch einen Presssitz vorgesehen, wodurch die Fügenaht während des Betriebs entlastet werden kann.

Die Radschüssel (3) besteht aus einem Warmumformstahl oder lufthärtenden Stahl, welche den Vorteil haben, dass sie härtbar sind und in dem entsprechenden Bauteil eine hohe Härte respektive hohe Zugfestigkeit eingestellt werden kann und damit eine höhere zyklische Biegewechselfestigkeit aufweisen. Auch die Verwendung eines Werkstoffverbundes mit beispielsweise drei Stahllagen, von denen mindestens eine Lage vergütbar, insbesondere härtbar ist, ist denkbar.

Die Radschüssel (3) ist scheibenförmig ausgebildet und umfasst einen zumindest teilweise, vorzugsweise vollständig umlaufenden, angewinkelten Endbereich, welcher den Übergangsbereich (8) zur Anbindung an die Felge (2) bildet. Erfindungsgemäß weist zumindest der Übergangsbereich (8) eine wärmebehandelte Gefügestruktur mit einer Zugfestigkeit zwischen 500 und 1300 MPa und/oder einer Härte zwischen 150 und 400 HV 0,1 auf, welche die Betriebsfestigkeit und Sicherheit des Fahrzeugrades positiv beeinflusst und eine ausreichende Festigkeit und Duktilität bzw. Schwingfestigkeit bereitstellt. Die Radschüssel (3) ist mittels Druckumformen, Zugumformen, Zugdruckumformen, Biegeumformen, Schubumformen, Drückwalzen oder Tiefziehen, insbesondere mittels Warmumformung mit optional zumindest teilweiser (Press-) Härtung, oder mittels eine Kombination der genannten Herstellungsverfahren geformt, wobei die wärmebehandelte Gefügestruktur zumindest im Übergangsbereich (8) der Radschüssel (3) vor, während und/oder nach einem Formen durch eine zumindest bereichsweise Wärmebehandlung eingestellt werden kann. Durch die Auswahl geeigneter Stahlwerkstoffe, vorzugsweise eine der vorgenannten Stähle, auch mehrlagig als Werkstoffverbund, können in Kombination mit einer zumindest bereichsweisen und maßgeschneiderten Wärmebehandlung gezielt wärmebehandelte Gefügestrukturen mit einer Zugfestigkeit zwischen 500 und 1300 MPa und/oder einer Härte zwischen 150 und 400 HV 0,1 in der Radschüssel (3) eingestellt werden. Für die Erzeugung der wärmebehandelten Gefügestrukturen wird auf die Ausführungen im allgemeinen Teil der Beschreibung, welche lediglich Beispiele angeben, verwiesen.

An den Übergangsbereich (8) schließt sich ein erster Bereich (9) an, in welchem auf dem Umfang verteilt Öffnungen (6) vorgesehen sind, die beispielsweise als Belüftungslöcher fungieren und/oder durch gezieltes Ausstanzen bzw. Weglassen von Material zu einer Reduzierung des Gesamtgewichts des Fahrzeugrades (1) beitragen. Eine vorzugsweise zumindest bereichsweise Ausdehnung der wärmebehandelten Gefügestruktur vom Übergangsbereich (8) ausgehend in den ersten Bereich (9) kann sich positiv auf die Übertragung von Kräften mit häufigen Lastwechseln im Betrieb von dem auf der Felge (2) montierten Reifen in den Radträger auswirken. Ferner kann, wenn die wärmebehandelte Gefügestruktur vollständig den ersten Bereich (9) ausfüllt, ein nachträgliches Stanzen der Öffnungen nach der Fertigstellung der Endgeometrie der Radschüssel (3) bei beispielsweise mechanisch geringem Werkzeugverschleiß erleichtert werden.

Die Radschüssel (3) umfasst einen zweiten Bereich (11), welcher beispielsweise den Anbindungsbereich zur lösbaren Anbindung an einen Radträger bildet, in welchem Öffnungen (5) zur Aufnahme von nicht dargestellten Verbindungsmitteln (Bolzen/Schrauben) vorgesehen sind. Der zweite Bereich (11) grenzt an einer Mittenöffnung (4) der Radschüssel (3) an, welche beispielsweise der Zentrierung des Rades an eine nicht dargestellte Radnabe dient, welche eine Komponente eines nicht dargestellten Radträgers ist. Die Mittenöffnung (4) ist durch einen kragenförmig ausgebildeten Bereich (13) definiert. Weist der zweite Bereich (11) eine wärmebehandelte Gefügestruktur auf, so hat dies beispielsweise den Vorteil, dass im Bereich der Anbindungsfläche (11.1) für die Verbindungsmittel lokale Spannungsspitzen vergleichmäßigt bzw. großflächig in den umliegenden Bereich (13, 10) verteilt werden können und damit die Kerbempfindlichkeit reduziert werden kann.

Die Radschüssel (3) umfasst mindestens einen dritten Bereich (10), welcher eine Gefügestruktur mit einer Zugfestigkeit größer als 1300 MPa und/oder Härte größer als 400 HV 0,1, insbesondere eine (press-) gehärtete Gefügestruktur aufweist. Der dritte Bereich (10) befindet sich zwischen dem Anbindungsbereich zur lösbaren Anbindung an einen Radträger -zweiter Bereich (11)- und dem ersten Bereich (9), welcher an dem Übergangsbereich (8) angrenzt, und dient der lokalen/globalen Versteifung der Radschüssel. Der kragenförmig ausgebildete Bereich (13) kann je nach Fahrzeugradtyp und Anforderung eine wärmebehandelte Gefügestruktur aufweisen oder gehärtet sein.

Alternativ und hier nicht dargestellt kann die komplette Radschüssel eine wärmebehandelte Gefügestruktur mit einer Zugfestigkeit zwischen 500 und 1300 MPa und/oder einer Härte zwischen 150 und 400 HV 0,1 aufweisen, wodurch eine homogene Festigkeit und/oder Härte in der schwingbelasteten Radschüssel bereitgestellt und damit metallurgische Kerben im Wesentlichen verhindert werden können.

Wird eine Felge (2) verwendet, welche aus einem Warmumformstahl oder einem lufthärtenden Stahl gebildet ist, weist sie vorzugsweise zumindest bereichsweise in einem Bereich (14) eine wärmebehandelte Gefügestruktur mit einer Zugfestigkeit zwischen 500 und 1300 MPa und/oder einer Härte zwischen 150 und 400 HV 0,1 auf, in welchem die Radschüssel (3) mit ihrem Übergangsbereich (8) anliegt und/oder eingepresst ist und mittels Fügenaht (7) angebunden ist. Auch die Verwendung alternativer Fügeverfahren sowie eines Werkstoffverbundes mit beispielsweise drei Stahllagen, von denen mindestens eine Lage vergütbar, insbesondere härtbar ist, ist denkbar. Die Betriebsfestigkeit und Sicherheit des Fahrzeugrades kann bei der Verwendung der vorgenannten Stähle als Material für die Felge erhöht werden. Beispielsweise weist der das sogenannte Felgenhorn bildende Bereich (15) eine wärmebehandelte Gefügestruktur auf, welcher mindestens auf der dem Radträger abgewandten Seite im montierten Zustand des Fahrzeugrades (1) vorgesehen ist, um im Falle eines Bordsteinkontaktes eine vollständige Beschädigung der Felge (2) respektive des Fahrzeugrades (1) zu vermeiden. Bei Bedarf kann auch in der kompletten Felge eine wärmebehandelte Gefügestruktur mit einer Zugfestigkeit zwischen 500 und 1300 MPa und/oder einer Härte zwischen 150 und 400 HV 0,1 eingestellt werden. Für die Erzeugung der zumindest bereichsweise wärmebehandelten Gefügestrukturen in der Felge (2) wird auf die Ausführungen in Bezug auf die Radschüssel (3) verwiesen.

Um eine optimale Betriebsfestigkeit und Sicherheit des gesamten Fahrzeugrades (1) zu gewährleiste, weist die wärmebehandelte Gefügestruktur des Übergangsbereichs (8), des ersten Bereich (9) und/oder des zweiten Bereichs (11) oder alternativ der kompletten Radschüssel und/oder Felge eine Zugfestigkeit zwischen 800 und 1200 MPa und/oder eine Härte zwischen 250 und 375 HV 0,1, vorzugsweise zwischen 850 und 1100 MPa und/oder eine Härte zwischen 265 und 340 HV 0,1, besonders bevorzugt zwischen 900 und 1050 MPa und/oder eine Härte zwischen 280 und 325 HV 0,1 auf. Die wärmebehandelte Gefügestruktur besteht beispielsweise aus mindestens zwei der Phasen Ferrit, Perlit, Bainit, Austenit oder Martensit, insbesondere überwiegend aus Ferrit mit mindestens einer der Phasen Perlit, Bainit, Austenit oder Martensit. Alternativ kann die wärmebehandelte Gefügestruktur beispielsweise überwiegend Martensit, insbesondere angelassenen Martensit aufweisen.

Die Erfindung ist nicht auf die in der Zeichnung dargestellten Ausführungsbeispiele sowie auf die Ausführungen in der allgemeinen Beschreibung beschränkt, vielmehr kann auch die Felge 2 und/oder Radschüssel aus einem Tailored Product, beispielsweise einem Tailored Blank und/oder Tailored Rolled Blank gebildet sein. Je nach Fahrzeugtyp ist das Fahrzeugrad mit seiner Radschüssel und Felge mit entsprechenden Materialdicken, welche entlang des jeweiligen Querschnitts auch variieren können, belastungs- und/oder gewichtsoptimiert ausgelegt. Besonders vorteilhaft ist die Erfindung auch bei Nutzfahrzeugrädern anwendbar.

### Bezugszeichenliste

- 1: Fahrzeugrad
- 2: Felge
- 3: Radschüssel
- 3.1: umlaufende Kante der Radschüssel
- 4: Mittenöffnung
- 5: Öffnung zur Aufnahme von Verbindungsmitteln
- 6: Öffnung, Belüftungsöffnung
- 7: Kehlnaht
- 8: Übergangsbereich zur Anbindung an die Felge
- 9: erster Bereich
- 10: dritter Bereich
- 11: zweiter Bereich, Anbindungsbereich zur lösbaren Anbindung an einen Radträger
- 11.1: Anbindungsfläche für die Verbindungsmittel
- 12: Symmetrieachse
- 13: kragenförmig ausgebildeter Bereich
- 14: ein Bereich der Felge
- 15: das Felgenhorn bildende Bereich

## Patentansprüche

1. Fahrzeugrad (1) umfassend eine Felge (2) zur Aufnahme eines Reifens und eine an die Felge (2) stoff-, kraft- und/oder formschlüssig angebundene Radschüssel (3), mit einem Anbindungsbereich (11) zur lösbaren Anbindung an einen Radträger, wobei die Radschüssel (3) aus einem zumindest bereichsweise wärmebehandelten Stahlwerkstück gebildet ist, wobei die Radschüssel (3) mittels Warmumformung mit optional zumindest teilweiser (Press-) Härtung geformt ist,
**dadurch gekennzeichnet, dass**
die Radschüssel (3) zumindest in einem Übergangsbereich (8) zur Anbindung an die Felge (2) eine wärmebehandelte Gefügestruktur mit einer Zugfestigkeit zwischen 500 und 1300 MPa und/oder einer Härte zwischen 150 und 400 HV 0,1 aufweist, wobei sich die wärmebehandelte Gefügestruktur zumindest im Übergangsbereich (8) der Radschüssel (3) vor, während und/oder nach einem Formen durch eine zumindest bereichsweise Wärmebehandlung einstellt.

2. Fahrzeugrad nach Anspruch 1,
**dadurch gekennzeichnet, dass**
die wärmebehandelte Gefügestruktur eine Zugfestigkeit zwischen 800 und 1200 MPa und/oder eine Härte zwischen 250 und 375 HV 0,1, vorzugsweise zwischen 850 und 1100 MPa und/oder eine Härte zwischen 265 und 340 HV 0,1, besonders bevorzugt zwischen 900 und 1050 MPa und/oder eine Härte zwischen 280 und 325 HV 0,1 aufweist.

3. Fahrzeugrad nach Anspruch 1 oder 2,
**dadurch gekennzeichnet, dass**
die Radschüssel aus einem Vergütungsstahl, insbesondere aus einem Warmumformstahl oder lufthärtenden Stahl gebildet ist.

4. Fahrzeugrad nach einem der vorgenannten Ansprüche,
**dadurch gekennzeichnet, dass**
sich die wärmebehandelte Gefügestruktur mit einer Zugfestigkeit zwischen 500 und 1300 MPa und/oder einer Härte zwischen 150 und 400 HV 0,1 aus dem Übergangsbereich (8) zumindest bereichsweise in einen ersten Bereich (9) erstreckt, in welchem optional Belüftungslöcher (6) vorgesehen sind.

5. Fahrzeugrad nach einem der vorgenannten Ansprüche,
**dadurch gekennzeichnet, dass**
die wärmebehandelte Gefügestruktur mit einer Zugfestigkeit zwischen 500 und 1300 MPa und/oder einer Härte zwischen 150 und 400 HV 0,1 zumindest bereichsweise in einem zweiten Bereich (11) vorgesehen ist.

6. Fahrzeugrad nach einem der vorgenannten Ansprüche,
**dadurch gekennzeichnet, dass**
die Radschüssel (3) mindestens einen dritten Bereich (10) umfasst, welcher eine Gefügestruktur mit einer Zugfestigkeit größer als 1300 MPa und/oder einer Härte größer als 400 HV 0,1, insbesondere eine (press-) gehärtete Gefügestruktur aufweist.

7. Fahrzeugrad nach einem der Ansprüche 1 bis 4,
**dadurch gekennzeichnet, dass**
die komplette Radschüssel (3) eine wärmebehandelte Gefügestruktur mit einer Zugfestigkeit zwischen 500 und 1300 MPa und/oder einer Härte zwischen 150 und 400 HV 0,1 aufweist.

8. Fahrzeugrad nach einem der vorgenannten Ansprüche,
**dadurch gekennzeichnet, dass**
das die Felge (2) aus einem Vergütungsstahl, insbesondere aus einem Warmumformstahl oder einem lufthärtenden Stahl gebildet ist und zumindest bereichsweise in einem Bereich (14) eine wärmebehandelte Gefügestruktur mit einer Zugfestigkeit zwischen 500 und 1300 MPa und/oder einer Härte zwischen 150 und 400 HV 0,1 aufweist, in welchem die Radschüssel (3) mit ihrem Übergangsbereich (8) anliegt und/oder eingepresst ist und angebunden ist.

9. Fahrzeugrad nach einem der vorgenannten Ansprüche,
**dadurch gekennzeichnet, dass**
die Felge (2) mittels Druckumformen, Zugumformen, Zugdruckumformen, Biegeumformen, Schubumformen, Drückwalzen oder Tiefziehen, insbesondere mittels Warmumformung mit optional zumindest teilweiser (Press-) Härtung geformt wird, wobei sich die wärmebehandelte Gefügestruktur zumindest in einem Bereich (14) der Felge (2) vor, während und/oder nach einem Formen durch eine zumindest bereichsweise Wärmebehandlung einstellt.

10. Verwendung des Fahrzeugrades nach einem der vorgenannten Ansprüche in Personenfahrzeugen, Nutzfahrzeugen, Lastkraftwagen, Sonderfahrzeugen, Bussen, Omnibussen, ob mit Verbrennungsmotor und/oder elektrischem Antrieb, Anhänger oder Trailer.

## Claims

1. Vehicle wheel (1) comprising a rim (2) for receiving a tire and a wheel disk (3) attached to the rim (2) in a substance-to-substance, force-fitting and/or form-fitting manner, with an attachment region (11) for releasably attaching to a wheel mount, wherein the wheel disk (3) is formed of a steel workpiece that is heat-treated at least in certain regions, wherein the wheel disk (3) is formed by hot-forming with optionally at least partial (press-) quenching,
**characterized in that**
the wheel disk (3) has, at least in a transition region (8) for attaching to the rim (2), a heat-treated structure having a tensile strength of between 500 and 1300 MPa and/or a hardness of between 150 and 400 HV 0.1, wherein the heat-treated structure at least in the transition region (8) of the wheel disk (3) is established prior to, during and/or after a forming operation by heat treatment at least in certain regions.

2. Vehicle wheel according to Claim 1,
**characterized in that**
the heat-treated structure has a tensile strength of between 800 and 1200 MPa and/or a hardness of between 250 and 375 HV 0.1, preferably between 850 and 1100 MPa and/or a hardness of between 265 and 340 HV 0.1, particularly preferably between 900 and 1050 MPa and/or a hardness of between 280 and 325 HV 0.1.

3. Vehicle wheel according to Claim 1 or 2,
**characterized in that**
the wheel disk is made of a tempering steel, in particular a hot-forming steel or an air-hardening steel.

4. Vehicle wheel according to one of the preceding claims,
**characterized in that**
the heat-treated structure having a tensile strength of between 500 and 1300 MPa and/or a hardness of between 150 and 400 HV 0.1 extends from the transition region (8) at least in certain regions into a first region (9) in which ventilation holes (6) are optionally provided.

5. Vehicle wheel according to one of the preceding claims,
**characterized in that**
the heat-treated structure having a tensile strength of between 500 and 1300 MPa and/or a hardness of between 150 and 400 HV 0.1 is provided in a second region (11) at least in certain regions.

6. Vehicle wheel according to one of the preceding claims,
**characterized in that**
the wheel disk (3) comprises at least a third region (10) which has a structure with a tensile strength of greater than 1300 MPa and/or a hardness of greater than 400 HV 0.1, in particular a (press-) quenched structure.

7. Vehicle wheel according to one of Claims 1 to 4,
**characterized in that**
the complete wheel disk (3) has a heat-treated structure having a tensile strength of between 500 and 1300 MPa and/or a hardness of between 150 and 400 HV 0.1.

8. Vehicle wheel according to one of the preceding claims,
**characterized in that**
the rim (2) is made of a tempering steel, in particular a hot-forming steel or an air-hardening steel, and has, at least in certain regions, in a region (14) a heat-treated structure having a tensile strength of between 500 and 1300 MPa and/or a hardness of between 150 and 400 HV 0.1, in which the wheel disk (3) lies against and/or is pressed in and attached with its transition region (8).

9. Vehicle wheel according to one of the preceding claims,
**characterized in that**
the rim (2) is formed by compressive forming, tensile forming, tensile-compressive forming, bending, shear forming, flow forming or deep drawing, in particular by hot-forming with optionally at least partial (press-) quenching, wherein the heat-treated structure at least in a region (14) of the rim (2) is established prior to, during and/or after a forming operation by heat treatment at least in certain regions.

10. Use of the vehicle wheel according to one of the preceding claims in cars, utility vehicles, goods vehicles, special-purpose vehicles, buses, omnibuses, whether with an internal combustion engine and/or electric drive, or trailers.

## Revendications

1. Roue de véhicule (1) comprenant une jante (2), destinée à recevoir un pneumatique, et un disque de roue (3) relié à la jante (2) par une liaison de matière, en force et/ou par complémentarité de formes et pourvu d'une zone de liaison (11) destinée au raccordement à un porte-roue, le disque de roue (3) étant formé à partir d'une pièce en acier qui est traitée thermiquement au moins par endroits, le disque de roue (3) étant formé au moyen d'un formage à chaud avec éventuellement un durcissement (à la presse) au moins partiel,
**caractérisée en ce que**
le disque de roue (3) comporte une microstructure traitée thermiquement, ayant une résistance à la traction comprise entre 500 et 1300 MPa et/ou une dureté comprise entre 150 et 400 HV 0,1, au moins dans une zone de transition (8) destinée au raccordement à la jante (2), la microstructure traitée thermiquement étant établie au moins dans la zone de transition (8) du disque de roue (3) avant, pendant et/ou après le formage par traitement thermique au moins par endroits.

2. Roue de véhicule selon la revendication 1,
**caractérisée en ce que**
la microstructure traitée thermiquement a une résistance à la traction comprise entre 800 et 1200 MPa et/ou une dureté comprise entre 250 et 375 HV 0,1, de préférence entre 850 et 1100 MPa et/ou une dureté comprise entre 265 et 340 HV 0,1, de manière particulièrement préférée entre 900 et 1050 MPa et/ou une dureté comprise entre 280 et 325 HV 0,1.

3. Roue de véhicule selon la revendication 1 ou 2,
**caractérisée en ce que**
le disque de roue est réalisé en acier traité, notamment en acier de formage à chaud ou en acier de trempe à l'air.

4. Roue de véhicule selon l'une des revendications précédentes,
**caractérisée en ce que**
la microstructure traitée thermiquement, ayant une résistance à la traction comprise entre 500 et 1300 MPa et/ou une dureté comprise entre 150 et 400 HV 0,1, s'étend depuis la zone de transition (8) au moins par endroits jusque dans une première zone (9) dans laquelle des trous de ventilation (6) sont éventuellement prévus.

5. Roue de véhicule selon l'une des revendications précédentes,
**caractérisée en ce que**
la microstructure traitée thermiquement, ayant une résistance à la traction comprise entre 500 et 1300 MPa et/ou une dureté comprise entre 150 et 400 HV 0,1, est prévue au moins par endroits dans une deuxième zone (11).

6. Roue de véhicule selon l'une des revendications précédentes,
**caractérisée en ce que**
le disque de roue (3) comprend au moins une troisième zone (10) qui comporte une microstructure ayant une résistance à la traction supérieure à 1300 MPa et/ou une dureté supérieure à 400 HV 0,1, en particulier une microstructure durcie (à la presse).

7. Roue de véhicule selon l'une des revendications 1 à 4,
**caractérisée en ce que**
le disque de roue complet (3) comporte une microstructure traitée thermiquement ayant une résistance à la traction comprise entre 500 et 1300 MPa et/ou une dureté comprise entre 150 et 400 HV 0,1.

8. Roue de véhicule selon l'une des revendications précédentes,
**caractérisée en ce que**
la jante (2) est formée d'un acier traité, notamment d'un acier de formage à chaud ou d'un acier de trempe à l'air et comporte au moins par endroits dans une zone (14) une microstructure traitée ayant une résistance à la traction comprise entre 500 et 1300 MPa et/ou une dureté comprise entre 150 et 400 HV 0,1, dans laquelle le disque de roue (3) vient en appui avec sa zone de transition (8) et/ou est enfoncé et raccordé.

9. Roue de véhicule selon l'une des revendications précédentes,
**caractérisée en ce que**
la jante (2) est formée au moyen d'un formage sous pression, d'un formage sous traction, d'un formage sous pression et traction, d'un formage par cintrage, d'une déformation plastique par poussée, d'un laminage sous pression ou d'un emboutissage profond, en particulier au moyen d'un formage à chaud avec éventuellement un durcissement (à la presse) au moins partiel, la microstructure traitée thermiquement étant établie au moins dans une zone (14) de la jante (2) avant, pendant et/ou après un formage par traitement thermique au moins par endroits.

10. Utilisation de la roue de véhicule selon l'une des revendications précédentes dans des véhicules de tourisme, véhicules utilitaires, camions, véhicules spéciaux, bus, omnibus, qu'ils soient à moteur thermique et/ou électrique, qu'ils comportent une remorque ou une semi-remorque.
